# EUROPÄISCHE PATENTSCHRIFT

(11) **EP 3 308 991 B1**
(45) Veröffentlichungstag und Bekanntmachung des Hinweises auf die Patenterteilung: **11.11.2020**
(21) Anmeldenummer: 17193729.5
(22) Anmeldetag: 28.09.2017
(51) Int. Cl.: B60K 11/02, B60K 6/46, F01P 3/00, F01P 7/00, H01M 10/613, H01M 10/625, F16H 57/04, F01P 7/16, B60K 1/00

(54) **ANTRIEBSEINRICHTUNG SOWIE VERFAHREN ZUM BETREIBEN EINER ANTRIEBSEINRICHTUNG**
DRIVE DEVICE AND METHOD FOR OPERATING A DRIVE DEVICE
DISPOSITIF D'ENTRAÎNEMENT ET PROCÉDÉ DESTINÉ AU FONCTIONNEMENT D'UN DISPOSITIF D'ENTRAÎNEMENT

(30) Priorität: 17.10.2016 DE 102016220227
(43) Veröffentlichungstag der Anmeldung: 18.04.2018
(73) Patentinhaber: AUDI AG, 85045 Ingolstadt (DE)
(72) Erfinder: Kopp, Andreas, 85092 Kösching (DE)

(56) Entgegenhaltungen:
- DE-A1-102007 005 391
- GB-A- 2 383 840
- US-A1- 2010 243 215

## Beschreibung

Die Erfindung betrifft eine Antriebseinrichtung mit einem als Brennkraftmaschine ausgebildeten ersten Antriebsaggregat, einem als elektrische Maschine ausgebildeten zweiten Antriebsaggregat sowie einem Getriebe, über das das erste Antriebsaggregat und/oder das zweite Antriebsaggregat mit einer Abtriebswelle der Antriebseinrichtung gekoppelt oder koppelbar ist, wobei das erste Antriebsaggregat und das zweite Antriebsaggregat zur Temperierung an einen gemeinsamen, durch beide Antriebsaggregate verlaufenden Kühlkreislauf angeschlossen sind, wobei das Getriebe zur Temperierung einen Getriebewärmeübertrager aufweist, der über eine Zirkulationsleitung strömungstechnisch mit dem Kühlkreislauf verbunden oder verbindbar ist. Die Erfindung betrifft weiterhin ein Verfahren zum Betreiben einer Antriebseinrichtung.

Die Antriebseinrichtung dient vorzugsweise dem Antreiben eines Kraftfahrzeugs, insoweit also dem Bereitstellen eines auf das Antreiben des Kraftfahrzeugs gerichteten Drehmoments. Dieses Drehmoment kann auch als Antriebsdrehmoment bezeichnet werden. Zum Bereitstellen des Drehmoments verfügt die Antriebseinrichtung über mehrere Antriebsaggregate, nämlich zumindest das erste Antriebsaggregat und das zweite Antriebsaggregat. Die beiden Antriebsaggregate sind unterschiedlichen Typs, sodass die Antriebseinrichtung als Hybridantriebseinrichtung vorliegt. Hierbei ist das erste Antriebsaggregat als Brennkraftmaschine und das zweite Antriebsaggregat als elektrische Maschine ausgestaltet.

Weiterhin verfügt die Antriebseinrichtung über das Getriebe. Über das Getriebe sind das erste Antriebsaggregat, das zweite Antriebsaggregat oder beide mit der Abtriebswelle gekoppelt oder zumindest koppelbar. Letzteres ist insbesondere der Fall, falls dem Getriebe eine Schaltkupplung, beispielsweise eine Anfahrkupplung der Antriebseinrichtung, zugeordnet ist. Das Getriebe ist beispielsweise als Gangwechselgetriebe ausgestaltet. Dieses ermöglicht das Einstellen einer aus einer Vielzahl von Übersetzungen ausgewählten Übersetzung zwischen dem ersten Antriebsaggregat und/oder dem zweiten Antriebsaggregat einerseits und der Abtriebswelle der Antriebseinrichtung andererseits. Das Gangwechselgetriebe kann grundsätzlich beliebig ausgestaltet sein und zum Beispiel als Automatikgetriebe, insbesondere Wandler-Automatikgetriebe, automatisiertes Schaltgetriebe, insbesondere Mehrfachkupplungsgetriebe, beispielsweise Doppelkupplungsgetriebe, oder stufenloses Getriebe ausgestaltet sein. Alternativ kann das Getriebe auch als festes, also nicht schaltbares, Getriebe, als Differentialgetriebe oder dergleichen vorliegen. Das Differentialgetriebe kann wiederum beispielsweise als Mittendifferentialgetriebe oder als Achsdifferentialgetriebe ausgestaltet sein.

Während des Betriebs des ersten Antriebsaggregats und des zweiten Antriebsaggregats fällt an diesen Wärme an. Diese wird zunächst zum Erwärmen der Antriebsaggregate auf ihre jeweilige Betriebstemperatur verwendet, wobei die Betriebstemperatur des ersten Antriebsaggregats gleich der Betriebstemperatur des zweiten Antriebsaggregats oder von dieser verschieden ist. Hat das jeweilige Antriebsaggregat seine Betriebstemperatur erreicht, so ist es notwendig, die weiterhin anfallende Wärme zumindest teilweise abzuführen, um eine weitere Erwärmung des Antriebsaggregats über seine Betriebstemperatur hinaus zu vermeiden.

Hierzu ist der Kühlkreislauf vorgesehen, an welchen sowohl das erste Antriebsaggregat als auch das zweite Antriebsaggregat zur jeweiligen Temperierung zumindest zeitweise angeschlossen sind. Der Kühlkreislauf liegt insoweit wenigstens zeitweise als gemeinsamer Kühlkreislauf für beide Antriebsaggregate, nämlich das erste Antriebsaggregat und das zweite Antriebsaggregat, vor. In dem Kühlkreislauf wird zumindest zeitweise ein Kühlfluid, beispielsweise ein Kühlmittel oder ein Kältemittel, umgewälzt. Dabei kann es zumindest einem der beiden Antriebsaggregate oder beiden Antriebsaggregaten zugeführt werden. In dem jeweiligen Antriebsaggregat nimmt das Kühlfluid in dem Antriebsaggregat vorliegende Wärme auf und transportiert diese aus dem Antriebsaggregat ab. Beispielsweise ist dem Kühlkreislauf ein Kühler zugeordnet, mittels welchem die nunmehr in dem Kühlfluid vorliegende Wärme an eine Außenumgebung der Antriebseinrichtung abgegeben wird. In dem Kühler wird insoweit die Temperatur des Kühlfluids verringert. Das somit abgekühlte Kühlfluid kann erneut einem oder mehreren der Antriebsaggregate zugeführt werden.

Aus dem Stand der Technik ist beispielsweise die Druckschrift DE 10 2007 005 391 A1 bekannt. Diese betrifft eine Kühleranordnung für einen Antriebsstrang eines Kraftfahrzeugs mit einem ersten Kühlmittelkreislauf mit einem ersten Kühlmittelkühler und mit einem zweiten Kühlmittelkreislauf mit einem zweiten Kühlmittelkühler. Dabei ist vorgesehen, dass eine Verbindung zwischen dem ersten Kühlmittelkreislauf und dem zweiten Kühlmittelkreislauf vorgesehen ist.

Es ist Aufgabe der Erfindung, eine Antriebseinrichtung vorzuschlagen, welche gegenüber bekannten Antriebseinrichtungen Vorteile aufweist, insbesondere einen effizienteren Betrieb nicht nur wenigstens eines der Antriebsaggregate, sondern vielmehr der gesamten Antriebseinrichtung ermöglicht.

Dies wird erfindungsgemäß mit einer Antriebseinrichtung mit den Merkmalen des Anspruchs 1 erreicht. Dabei ist vorgesehen, dass die Zirkulationsleitung mittels eines Schaltventils von dem Kühlkreislauf strömungstechnisch entkoppelbar ist, wobei die Zirkulationsleitung beiderseits des zweiten Antriebsaggregats in den Kühlkreislauf einmündet, sodass bei mit dem Kühlkreislauf strömungstechnisch verbundener Zirkulationsleitung ein geschlossener und unabhängig von dem gemeinsamen Kühlkreislauf betreibbarer Wärmetauschkreislauf ausgebildet ist, in dem das zweite Antriebsaggregat und der Getriebewärmeübertrager vorliegen, wobei das erste Antriebsaggregat außerhalb des Wärmetauschkreislaufs vorliegt. Grundsätzlich ist vorgesehen, dass das Getriebe zur Temperierung einen Getriebewärmeübertrager aufweist, der über eine Zirkulationsleitung strömungstechnisch mit dem Kühlkreislauf verbunden oder verbindbar ist.

Über das Getriebe wird die Abtriebswelle von dem ersten Antriebsaggregat und/oder dem zweiten Antriebsaggregat angetrieben. Auch das Getriebe weist analog zu den beiden Antriebsaggregaten eine bestimmte Betriebstemperatur auf, bei welcher es besonders effizient arbeitet. Ist die Temperatur des Getriebes geringer als die Betriebstemperatur, so ist die Effizienz des Getriebes geringer. Insbesondere sinkt die Effizienz des Getriebes ausgehend von der Betriebstemperatur mit sinkender Temperatur ab. Dies rührt beispielsweise von der Viskosität eines in dem Getriebe verwendeten Schmiermittels her, welche bei Vorliegen der Betriebstemperatur geringer ist als bei einer geringeren Temperatur. Aufgrund der bei der Betriebstemperatur geringeren Viskosität kann die dann höhere Effizienz insbesondere aufgrund von geringeren Reibungsverlusten erzielt werden.

Aus diesem Grund ist es vorgesehen, dass das Getriebe mittels des Getriebewärmeübertragers temperiert wird. Der Getriebewärmeübertrager ist dabei an den gemeinsamen Kühlkreislauf angeschlossen, nämlich über die Zirkulationsleitung. Über die Zirkulationsleitung steht der Getriebewärmetauscher insoweit strömungstechnisch mit dem Kühlkreislauf in Verbindung, vorzugsweise permanent, und ist zumindest mit ihm Es ist ein Schaltventil vorgesehen, mittels welchem die Zirkulationsleitung wahlweise strömungstechnisch unterbrochen oder freigegeben beziehungsweise wahlweise von dem Kühlkreislauf entkoppelt oder mit ihm gekoppelt sein kann. In einem ersten Schaltzustand des Schaltventils ist insoweit der Getriebewärmeübertrager vorzugsweise mit dem gemeinsamen Kühlkreislauf strömungsverbunden, während die Strömungsverbindung in einem zweiten Schaltzustand unterbrochen ist.

Es ist vorgesehen, bei einem Betrieb des zweiten Antriebsaggregats, also der elektrischen Maschine, die an dieser anfallende Wärme dem ersten Antriebsaggregat zuzuführen, insbesondere während eines Stillstands des ersten Antriebsaggregats. Mit der an dem zweiten Antriebsaggregat anfallenden Wärme wird insoweit das erste Antriebsaggregat in Richtung seiner Betriebstemperatur vorgewärmt und mithin auf einen Betrieb vorbereitet, sodass bereits bei einem Start des ersten Antriebsaggregats dieses eine Temperatur aufweist, welche größer ist als die Umgebungstemperatur. Entsprechend kann das erste Antriebsaggregat bereits ab seinem Start mit höherer Effizienz betrieben werden.

Die Wärme des zweiten Antriebsaggregats wird also dem nicht im Betrieb befindlichen ersten Antriebsaggregat zugeführt. Von dort kann sie über die Oberfläche des ersten Antriebsaggregats verloren gehen, insbesondere durch natürliche und/oder erzwungene Konvektion. Ein Großteil der Wärme geht also verloren und steht somit bei einem möglichen Start des ersten Antriebsaggregats nicht mehr zur Verfügung. Die von dem zweiten Antriebsaggregat erzeugte Wärme wird also nicht unmittelbar zur Verbesserung des Wirkungsgrads der Antriebseinrichtung herangezogen.

Aus diesem Grund ist es nun vorgesehen, die Wärme nicht oder zumindest nicht ausschließlich dem ersten Antriebsaggregat zuzuführen, sondern vielmehr (auch) zur Temperierung des Getriebes heranzuziehen. Durch die Temperierung des Getriebes kann bereits zu einem früheren Zeitpunkt eine Verbesserung des Wirkungsgrads der Antriebseinrichtung erzielt werden, weil das zweite Antriebsaggregat über das Getriebe mit der Abtriebswelle gekoppelt ist. Entsprechend wird das Getriebe auch dann betrieben, wenn das zweite Antriebsaggregat noch außer Betrieb ist, also beispielsweise das an der Abtriebswelle bereitgestellte Drehmoment allein mittels des zweiten Antriebsaggregats erzeugt wird.

Im Rahmen einer weiteren Ausgestaltung der Erfindung ist ein elektrischer Energiespeicher zur Zwischenspeicherung von elektrischer Energie für den Betrieb des zweiten Antriebsaggregats vorgesehen, wobei der Energiespeicher einen Energiespeicherwärmeübertrager aufweist, der über eine weitere Zirkulationsleitung strömungstechnisch mit dem Kühlkreislauf verbunden oder verbindbar ist. Der elektrische Energiespeicher dient der Zwischenspeicherung von elektrischer Energie, die zumindest zeitweise für den Betrieb des zweiten Antriebsaggregats herangezogen werden kann. Umgekehrt kann selbstverständlich der Energiespeicher mit elektrischer Energie aufgeladen werden, die mittels des zweiten Antriebsaggregats durch generatorischen Betrieb erzeugt wird.

Während der Energiespeicher betrieben wird, während ihm also elektrische Energie zugeführt oder entnommen wird, fällt ebenfalls Wärme an. Zudem weist auch der Energiespeicher eine bestimmte Betriebstemperatur auf, bei welcher er besonders effizient arbeitet. Aus diesem Grund ist dem Energiespeicher zu seiner Temperierung der Energiespeicherwärmeübertrager zugeordnet. Dieser ist über die weitere Zirkulationsleitung mit dem Kühlkreislauf strömungstechnisch verbunden, insbesondere permanent, oder verbindbar.

Hinsichtlich der weiteren Zirkulationsleitung wird auf die Ausführungen zu der Zirkulationsleitung verwiesen. Insbesondere kann auch für die weitere Zirkulationsleitung ein Schaltventil vorliegen, welches als weiteres Schaltventil bezeichnet wird. Es kann nun vorgesehen sein, dass dem Energiespeicher elektrische Energie zum Betreiben des zweiten Antriebsaggregats entnommen wird, wobei Wärme anfällt. Das bedeutet also, dass bei dem Betreiben des zweiten Antriebsaggregats nicht nur in diesem Wärme anfällt, sondern zusätzlich in dem Energiespeicher. Auch diese Wärme soll nun bevorzugt genutzt werden, um das Getriebe zu temperieren. Dies ist insbesondere der Fall, solange das erste Antriebsaggregat nicht betrieben wird.

Eine weitere bevorzugte Ausführungsform der Erfindung sieht vor, dass die Zirkulationsleitung mittels eines Schaltventils und/oder die weite Zirkulationsleitung mittels eines weiteren Schaltventils von dem Kühlkreislauf strömungstechnisch entkoppelbar ist. Mithilfe des jeweiligen Schaltventils, also des Schaltventils oder des weiteren Schaltventils, soll die entsprechende Zirkulationsleitung, also die Zirkulationsleitung oder die weitere Zirkulationsleitung, von dem Kühlkreislauf entkoppelt werden können, zumindest teilweise. Sofern im Rahmen dieser Ausführungen lediglich von der Zirkulationsleitung und/oder dem Schaltventil die Rede ist, so sind die Ausführungen stets auch auf die weitere Zirkulationsleitung und/oder das weitere Schaltventil übertragbar.

Beispielsweise ist das Schaltventil strömungstechnisch zwischen der Zirkulationsleitung und dem Kühlkreislauf angeordnet. Das bedeutet, dass die Zirkulationsleitung strömungstechnisch über das Schaltventil mit dem Kühlkreislauf verbunden ist. Selbstverständlich kann es auch vorgesehen sein, dass das Schaltventil in der Zirkulationsleitung vorliegt, sodass diese mittels des Schaltventils strömungstechnisch freigegeben oder unterbrochen werden kann. Grundsätzlich ist es vorgesehen, dass der Kühlkreislauf unabhängig von der Zirkulationsleitung und/oder der weiteren Zirkulationsleitung von Kühlfluid durchströmbar ist. Auch bei entkoppelter Zirkulationsleitung und/oder entkoppelter weiterer Zirkulationsleitung kann also der Kühlkreislauf betrieben beziehungsweise von Kühlfluid durchströmt werden. Entsprechend wird der Kühlkreislauf zur Temperierung des ersten Antriebsaggregats und/oder des zweiten Antriebsaggregats, nicht jedoch des Getriebes und/oder des Energiespeichers verwendet.

Schließlich kann im Rahmen einer weiteren Ausgestaltung der Erfindung vorgesehen sein, dass die Zirkulationsleitung beiderseits des zweiten Antriebsaggregats in den Kühlkreislauf einmündet, sodass bei mit dem Kühlkreislauf strömungstechnisch verbundener Zirkulationsleitung ein geschlossener Wärmetauschkreislauf ausgebildet ist, indem das zweite Antriebsaggregat und der Getriebewärmeübertrager vorliegen. Über die Zirkulationsleitung ist somit eine strömungstechnisch einerseits des zweiten Antriebsaggregats vorliegende Stelle über den Getriebewärmeübertrager mit einer strömungstechnisch andererseits des zweiten Antriebsaggregats vorliegenden Stelle verbunden.

Ist der Kühlkreislauf strömungstechnisch mit der Zirkulationsleitung verbunden, so liegt ein geschlossener Wärmetauschkreislauf vor, in welchem Kühlfluid zwischen dem zweiten Antriebsaggregat und dem Getriebewärmeübertrager umgewälzt wird. Bevorzugt ist insoweit diesem geschlossenem Wärmetauschkreislauf, insbesondere der Zirkulationsleitung, eine Fördereinrichtung, beispielsweise eine Pumpe, zugeordnet. Besonders bevorzugt ist der geschlossene Wärmekreislauf unabhängig von dem gemeinsamen Kühlkreislauf betreibbar. Beispielsweise ist es vorgesehen, dass einerseits der Wärmetauschkreislauf und andererseits ein Teilkreislauf des gemeinsamen Kühlkreislaufs parallel betrieben werden, also parallel in ihnen Kühlfluid umgewälzt wird, bevorzugt mittels separater Fördereinrichtungen. Beispielsweise sind in dem Wärmetauschkreislauf nur das zweite Antriebsaggregat und der Getriebewärmeübertrager, sowie optional die Fördereinrichtung und/oder eine Leistungselektronik des zweiten Antriebsaggregats beziehungsweise ein der Leistungselektronik wärmeübertragend zugeordneter Wärmetauscher vorgesehen.

Die Erfindung betrifft weiterhin ein Verfahren nach Anspruch 4 zum Betreiben einer Antriebseinrichtung gemäß den vorstehenden Ausführungen.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu ihrem Betreiben können gemäß den vorstehenden Ausführungen weitergebildet sein, sodass insoweit auf diese verwiesen wird.

Im Rahmen einer bevorzugten Ausgestaltung der Erfindung ist vorgesehen, dass während eines Betriebs des zweiten Antriebsaggregats anfallende Wärme zum Temperieren des Getriebes verwendet wird. Auf eine derartige Vorgehensweise wurde vorstehend bereits hingewiesen.

Eine Weiterbildung der Erfindung sieht vor, dass das Temperieren des Getriebes bei deaktiviertem erstem Antriebsaggregat erfolgt. Insbesondere soll dem Getriebe priorisiert Wärme zugeführt werden, sodass dem Getriebe auch dann die von dem zweiten Antriebsaggregat und/oder dem Energiespeicher bereitgestellte Wärme zugeführt wird, wenn die Temperatur des ersten Antriebsaggregats kleiner ist als die Betriebstemperatur des ersten Antriebsaggregats, insbesondere auch dann, wenn die Temperatur der Umgebungstemperatur entspricht.

Eine bevorzugte weitere Ausgestaltung der Erfindung sieht vor, dass dem zweiten Antriebsaggregat die Wärme mittels eines Aggregatwärmeübertragers entnommen und dem Getriebe mittels des Getriebewärmeübertragers zugeführt wird. Dem zweiten Antriebsaggregat ist also der Aggregatwärmeübertrager zugeordnet. Der Aggregatwärmeübertrager liegt in dem gemeinsamen Kühlkreislauf vor.

Eine Weiterbildung der Erfindung sieht vor, dass nach dem Erreichen einer Solltemperatur durch das Getriebe die Wärme zum Temperieren des ersten Antriebsaggregats verwendet wird. Bevorzugt wird also dem ersten Antriebsaggregat erst dann die von dem zweiten Antriebsaggregat und/oder dem Energiespeicher bereitgestellte Wärme zugeführt, wenn das Getriebe seine Solltemperatur erreicht hat, die Temperatur des Getriebes also der Solltemperatur entspricht oder größer ist als diese. Die Solltemperatur entspricht bevorzugt der Betriebstemperatur des Getriebes, bei welcher ein besonders effizientes Betreiben des Getriebes bei hohem Wirkungsgrad möglich ist.

Schließlich kann es im Rahmen einer weiteren bevorzugten Ausführungsform der Erfindung vorgesehen sein, dass zum Temperieren des Getriebes und/oder des ersten Antriebsaggregats zusätzlich Wärme verwendet wird, die während eines Betriebs eines elektrischen Energiespeichers anfällt, wobei in dem Energiespeicher gespeicherte elektrische Energie zumindest zeitweise zum Betreiben des zweiten Antriebsaggregats verwendet wird. Auch auf das Vorliegen des Energiespeichers wurde vorstehend bereits hingewiesen, sodass auf die entsprechenden Ausführungen verwiesen wird.

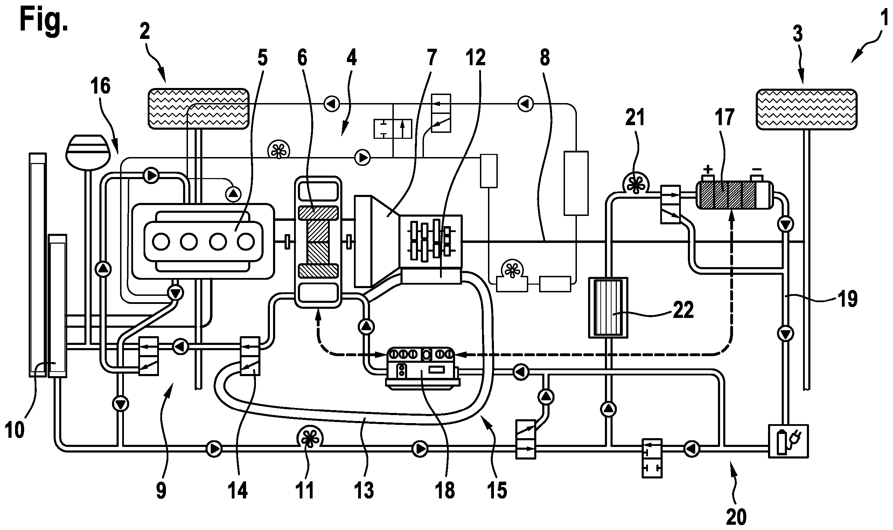

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Bereichs eines Bereichs eines Kraftfahrzeugs, welches eine Antriebseinrichtung aufweist.

Die Figur zeigt eine schematische Darstellung eines Kraftfahrzeugs 1, welches beispielsweise eine nicht angetriebene Radachse 2 und eine angetriebene Radachse 3 aufweist. Selbstverständlich können jedoch auch beide Radachsen 2 und 3 als antreibbare Radachsen ausgestaltet sein. Das Antreiben der Radachsen 2 und 3 erfolgt mittels einer Antriebseinrichtung 4, die über ein erstes Antriebsaggregat 5, ein zweites Antriebsaggregat 6 sowie ein Getriebe 7 verfügt.

Über das Getriebe 7 ist eine Abtriebswelle 8 der Antriebseinrichtung 4 mittels des ersten Antriebsaggregats 5 und/oder des zweiten Antriebsaggregats 6 antreibbar. Hierzu ist beispielsweise die Abtriebswelle 8 mit dem Getriebe 7, insbesondere einer Ausgangswelle des Getriebes 7 wirkverbunden, bevorzugt starr und/oder permanent. Das zweite Antriebsaggregat 6 ist dagegen mit einer Eingangswelle des Getriebes 7 gekoppelt, vorzugsweise ebenfalls starr und/oder permanent. Das erste Antriebsaggregat 5 kann über das zweite Antriebsaggregat 6 mit dem Getriebe 7 koppelbar sein. Hierzu liegt bevorzugt zwischen dem ersten Antriebsaggregat 5 und dem zweiten Antriebsaggregat 6 eine Schaltkupplung, beispielsweise eine Anfahrkupplung, vor.

Zur Temperierung des ersten Antriebsaggregats 5 und des zweiten Antriebsaggregats 6 ist ein gemeinsamer Kühlkreislauf 9 vorgesehen. In diesem kann neben den Antriebsaggregaten 5 und 6 ein Kühler 10 und/oder eine Fördereinrichtung 11, insbesondere eine Kühlfluidpumpe, vorliegen. Es ist deutlich zu erkennen, dass der Kühlkreislauf 9 durch beide Antriebsaggregate 5 und 6 verläuft. Zusätzlich ist es nun vorgesehen, dass das Getriebe 7 einen Getriebewärmeübertrager 12 aufweist, der über eine Zirkulationsleitung 13 mit dem Kühlkreislauf 9 strömungstechnisch verbunden oder zumindest verbindbar ist.

Bevorzugt ist die Zirkulationsleitung 13 über ein Schaltventil 14 mit dem Kühlkreislauf 9 verbunden. Die Zirkulationsleitung 13 mündet dabei bevorzugt beidseitig des zweiten Antriebsaggregats 6 in den Kühlkreislauf 9 ein, sodass bei entsprechendem Einstellen des Schaltventils 14 ein geschlossener Wärmetauschkreislauf 15 vorliegt, in welchem das zweite Antriebsaggregat 6 und der Getriebewärmeübertrager 12 vorliegen. Zumindest ist jedoch das erste Antriebsaggregat 5 außerhalb des Wärmetauschkreislaufs 15 angeordnet, diesem also strömungstechnisch nicht zugeordnet. Bevorzugt ist der Wärmetauschkreislauf 15 separat von dem Kühlkreislauf 9 oder zumindest einem Teilkreislauf 16 des Kühlkreislaufs 9 betreibbar. Zu diesem Zweck kann dem Wärmetauschkreislauf 15 eine separate, hier nicht dargestellte weitere Fördereinrichtung zugeordnet sein.

Die Antriebseinrichtung 4 verfügt weiterhin über einen elektrischen Energiespeicher 17, in welchem elektrische Energie zwischenspeicherbar ist, die zum Betreiben des zweiten Antriebsaggregats 6 heranziehbar ist. Der Energiespeicher 17 ist über eine Leistungselektronikeinrichtung 18 elektrisch mit dem zweiten Antriebsaggregat 6 verbunden. Dem Energiespeicher 17 ist ein hier nicht dargestellter Energiespeicherwärmeübertrager zugeordnet, welcher über eine weitere Zirkulationsleitung 19 mit dem Kühlkreislauf 9 strömungstechnisch verbunden beziehungsweise verbindbar ist.

Die Zirkulationsleitung 19 ist dabei derart ausgestaltet beziehungsweise mit dem Kühlkreislauf 9 verbunden, dass sie einen unabhängig von dem Kühlkreislauf 9 betreibbaren weiteren Wärmetauschkreislauf 20 bildet. In dem Wärmetauschkreislauf 20 sind eine zusätzliche Fördereinrichtung 21 sowie der Energiespeicher 17 angeordnet. Zudem kann dem Wärmetauschkreislauf 20 ein Wärmeübertrager 22 zugeordnet sein, mittels welchem von dem Energiespeicher 17 bereitgestellte Wärme anderen Zwecken zugeführt werden kann. Alternativ kann über den Wärmeübertrager 22 dem Energiespeicher 17 Wärme zugeführt werden.

Es ist nun vorgesehen, während eines Betriebs des zweiten Antriebsaggregats 6 in diesem anfallende Wärme zum Temperieren des Getriebes 7 zu verwenden, insbesondere bei deaktiviertem erstem Antriebsaggregat 5 beziehungsweise wenn die Temperatur des ersten Antriebsaggregats 5 kleiner ist als seine Betriebstemperatur. In anderen Worten wird die von dem zweiten Antriebsaggregat 6 bereitgestellte Wärme zunächst nur dem Getriebe 7 zugeführt, nämlich auch dann, wenn die Temperatur des ersten Antriebsaggregats 5 kleiner ist als seine Betriebstemperatur.

Erst wenn das Getriebe 7 eine Solltemperatur erreicht hat, welche beispielsweise einer Betriebstemperatur des Getriebes 7 entspricht, wird die von dem zweiten Antriebsaggregat 6 bereitgestellte Wärme dem ersten Antriebsaggregat 5 zu dessen Erwärmen zugeführt. Bevorzugt wird hierbei die Wärme auf das Getriebe 7 und das erste Antriebsaggregat 5 derart aufgeteilt, dass das Getriebe auf seiner Solltemperatur gehalten wird. Zusätzlich kann es vorgesehen sein, an beziehungsweise in dem Energiespeicher 17 anfallende Wärme zusätzlich dem Getriebe 7 und/oder dem ersten Antriebsaggregat 5 zuzuführen.

Die vorstehend beschriebene Ausgestaltung der Antriebseinrichtung 4 beziehungsweise die entsprechende Vorgehensweise ermöglicht ein äußerst effizientes Betreiben der gesamten Antriebseinrichtung 4, also nicht lediglich eines oder mehrerer der Antriebsaggregate 5 und 6, sondern zusätzlich auch des Getriebes 7. Dies ist insbesondere vor dem Hintergrund sinnvoll, dass auch bei einem Bereitstellen des an der Abtriebswelle 8 anliegenden Drehmoments allein mittels des zweiten Antriebsaggregats 6, also bei deaktiviertem Antriebsaggregat 5, das Getriebe 7 zum Übertragen des Drehmoments von dem zweiten Antriebsaggregat 6 zu der Abtriebswelle 8, also zum Herstellen der Wirkverbindung zwischen dem zweiten Antriebsaggregat 6 und der Abtriebswelle 8, verwendet wird.

## Patentansprüche

1. Antriebseinrichtung (4) mit einem als Brennkraftmaschine ausgebildeten ersten Antriebsaggregat (5), einem als elektrische Maschine ausgebildeten zweiten Antriebsaggregat (6) sowie einem Getriebe (7), über das das erste Antriebsaggregat (5) und/oder das zweite Antriebsaggregat (6) mit einer Abtriebswelle (8) der Antriebseinrichtung (4) gekoppelt oder koppelbar ist, wobei das erste Antriebsaggregat (5) und das zweite Antriebsaggregat (6) zeitweise zur Temperierung an einen gemeinsamen, durch beide Antriebsaggregate (5,6) verlaufenden Kühlkreislauf (9) angeschlossen sind, wobei das Getriebe (7) zur Temperierung einen Getriebewärmeübertrager (12) aufweist, der über eine Zirkulationsleitung (13) strömungstechnisch mit dem Kühlkreislauf (9) verbunden oder verbindbar ist, **dadurch gekennzeichnet, dass** eine Zirkulationsleitung (13) beiderseits des zweiten Antriebsaggregats (6) in eine Leitung des Kühlkreislaufs (9) einmündet und in einem ersten Schaltzustand eines Schaltventils (14) strömungstechnisch unterbrochen und in einem zweiten Schaltzustand freigegeben ist, sodass in dem ersten Schaltzustand des Schaltventils (14) der durch das erste Antriebsaggregat (5) und das zweite Antriebsaggregat (6), nicht jedoch durch den Getriebewärmeübertrager (12) verlaufende Kühlkreislauf (9) ausgebildet ist und bei einem Betrieb des zweiten Antriebsaggregats (6) anfallende Wärme dem ersten Antriebsaggregat (5) zugeführt wird, und in dem zweiten Schaltzustand des Schaltventils (14) der Wärmetauschkreislauf (15) ausgebildet ist, in dem das zweite Antriebsaggregat (6) und der Getriebewärmeübertrager (12), nicht jedoch das erste Antriebsaggregat (5) vorliegen und die bei dem Betrieb des zweiten Antriebsaggregats (6) anfallende Wärme zum Temperieren des Getriebes (7) herangezogen wird.

2. Antriebseinrichtung nach Anspruch 1, **gekennzeichnet durch** einen elektrischen Energiespeicher (17) zur Zwischenspeicherung von elektrischer Energie für den Betrieb des zweiten Antriebsaggregats (6), wobei der Energiespeicher (17) einen Energiespeicherwärmeübertrager aufweist, der über eine weitere Zirkulationsleitung (19) strömungstechnisch mit dem Kühlkreislauf (9) verbunden oder verbindbar ist.

3. Antriebseinrichtung nach Anspruch 2, **dadurch gekennzeichnet, dass** die weitere Zirkulationsleitung (19) mittels eines weiteren Schaltventils von dem Kühlkreislauf (9) strömungstechnisch entkoppelbar ist.

4. Verfahren zum Betreiben einer Antriebseinrichtung (4) nach einem oder mehreren der vorhergehenden Ansprüche, wobei die Antriebseinrichtung (4) über ein als Brennkraftmaschine ausgebildetes erstes Antriebsaggregat (5), ein als elektrische Maschine ausgebildetes zweites Antriebsaggregat (6) sowie ein Getriebe (7) verfügt, über das das erste Antriebsaggregat (5) und/oder das zweite Antriebsaggregat (6) mit einer Abtriebswelle (8) der Antriebseinrichtung (4) gekoppelt oder koppelbar ist, wobei das erste Antriebsaggregat (5) und das zweite Antriebsaggregat (6) zeitweise zur Temperierung an einen gemeinsamen, durch beide Antriebsaggregate (5,6) verlaufenden Kühlkreislauf (9) angeschlossen sind, wobei das Getriebe (7) zum Temperieren einen Getriebewärmeübertrager (12) aufweist, der über eine Zirkulationsleitung (13) strömungstechnisch mit dem Kühlkreislauf (9) verbunden ist oder verbunden werden kann, **dadurch gekennzeichnet, dass** die Zirkulationsleitung (13) beiderseits des zweiten Antriebsaggregats (6) in eine Leitung des Kühlkreislaufs (9) einmündet und in einem ersten Schaltzustand eines Schaltventils (14) strömungstechnisch unterbrochen und in einem zweiten Schaltzustand freigegeben ist, sodass in dem ersten Schaltzustand des Schaltventils (14) der durch das erste Antriebsaggregat (5) und das zweite Antriebsaggregat (6), nicht jedoch durch den Getriebewärmeübertrager (12) verlaufende Kühlkreislauf (9) ausgebildet ist und bei einem Betrieb des zweiten Antriebsaggregats (6) anfallende Wärme dem ersten Antriebsaggregat (5) zugeführt wird, und in dem zweiten Schaltzustand des Schaltventils (14) der Wärmetauschkreislauf (15) ausgebildet ist, in dem das zweite Antriebsaggregat (6) und der Getriebewärmeübertrager (12), nicht jedoch das erste Antriebsaggregat (5) vorliegen und die bei dem Betrieb des zweiten Antriebsaggregats (6) anfallende Wärme zum Temperieren des Getriebes (7) herangezogen wird.

5. Verfahren nach Anspruch 4, **dadurch gekennzeichnet, dass** während eines Betriebs des zweiten Antriebsaggregats (6) anfallende Wärme zum Temperieren des Getriebes (7) verwendet wird.

6. Verfahren nach Anspruch 4 oder 5, **dadurch gekennzeichnet, dass** das Temperieren des Getriebes (7) bei deaktiviertem erstem Antriebsaggregat (5) erfolgt.

7. Verfahren nach einem der Ansprüche 4 bis 6, **dadurch gekennzeichnet, dass** dem zweiten Antriebsaggregat (6) die Wärme mittels eines Aggregatwärmeübertragers entnommen und dem Getriebe (7) mittels des Getriebewärmeübertragers (12) zugeführt wird.

8. Verfahren nach einem der Ansprüche 4 bis 7, **dadurch gekennzeichnet, dass** nach dem Erreichen einer Solltemperatur durch das Getriebe (7) die Wärme zum Temperieren des ersten Antriebsaggregats (5) verwendet wird.

9. Verfahren nach einem der Ansprüche 4 bis 8, **dadurch gekennzeichnet, dass** zum Temperieren des Getriebes (7) und/oder des ersten Antriebsaggregats (5) zusätzlich Wärme verwendet wird, die während eines Betriebs eines elektrischen Energiespeichers (17) anfällt, wobei in dem Energiespeicher (17) gespeicherte elektrische Energie zumindest zeitweise zum Betreiben des zweiten Antriebsaggregats (6) verwendet wird.

## Claims

1. Drive apparatus (4) with a first drive unit (5) embodied as an internal combustion engine, a second drive unit (6) embodied as an electrical engine and a transmission (7) via which the first drive unit (5) and/or the second drive unit (6) are coupled or can be coupled to an output shaft (8) of the drive apparatus (4), wherein the first drive unit (5) and the second drive unit (6) are temporarily connected to a common cooling circuit (9) running through both drive units (5, 6) for temperature control, wherein the transmission (7) has a transmission heat exchanger (12) for temperature control, which is or can be fluidically connected to the cooling circuit (9) via a circulation line (13),
**characterised in that** a circulation line (13) on both sides of the second drive unit (6) opens into a line of the cooling circuit (9) and is fluidically interrupted in a first switching state of a switching valve (14) and released in a second switching state, so that in the first switching state of the switching valve (14) the cooling circuit (9) running through the first drive unit (5) and the second drive unit (6), but not through the transmission heat exchanger (12), is formed and when the second drive unit (6) is operated the resulting heat is fed to the first drive unit (5), and in the second switching state of the switching valve (14) the heat exchange circuit (15) is formed, in which the second drive unit (6) and the transmission heat exchanger (12), but not the first drive unit (5), are present and the heat generated during operation of the second drive unit (6) is used to control the temperature of the transmission (7).

2. Drive apparatus according to claim 1, **characterised by** an electrical energy store (17) for the intermediate storage of electrical energy for the operation of the second drive unit (6), wherein the energy store (17) has an energy store heat exchanger which is or can be fluidically connected to the cooling circuit (9) via a further circulation line (19).

3. Drive apparatus according to claim 2, **characterised in that** the further circulation line (19) can be fluidically decoupled from the cooling circuit (9) by means of a further switching valve.

4. Method for operating a drive apparatus (4) according to one or more of the preceding claims, wherein the drive apparatus (4) has a first drive unit (5) embodied as an internal combustion engine, a second drive unit (6) embodied as an electrical engine and a transmission (7), via which the first drive unit (5) and/or the second drive unit (6) is coupled or can be coupled to an output shaft (8) of the drive apparatus (4), wherein the first drive unit (5) and the second drive unit (6) are temporarily connected to a common cooling circuit (9) running through both drive units (5, 6) for temperature control, wherein the transmission (7) has a transmission heat exchanger (12) for temperature control, which is or can be fluidically connected to the cooling circuit (9) via a circulation line (13), **characterised in that** the circulation line (13) on both sides of the second drive unit (6) opens into a line of the cooling circuit (9) and is fluidically interrupted in a first switching state of a switching valve (14) and released in a second switching state, so that in the first switching state of the switching valve (14) the cooling circuit (9) running through the first drive unit (5) and the second drive unit (6), but not through the transmission heat exchanger (12), is formed and when the second drive unit (6) is in operation, the heat generated is fed to the first drive unit (5), and the heat exchange circuit (15) is formed in the second switching state of the switching valve (14), in which the second drive unit (6) and the transmission heat exchanger (12), but not the first drive unit (5), are present and the heat generated during operation of the second drive unit (6) is used to control the temperature of the transmission (7).

5. Method according to claim 4, **characterised in that** the heat generated during operation of the second drive unit (6) is used to control the temperature of the transmission (7).

6. Method according to claim 4 or 5, **characterised in that** the temperature control of the transmission (7) takes place with the first drive unit (5) deactivated.

7. Method according to any one of claims 4 to 6, **characterised in that** the heat is removed from the second drive unit (6) by means of a unit heat exchanger and fed to the transmission (7) by means of the transmission heat exchanger (12).

8. Method according to any one of claims 4 to 7, **characterised in that** after a setpoint temperature has been reached by the transmission (7), the heat is used to control the temperature of the first drive unit (5).

9. Method according to any one of claims 4 to 8, **characterised in that** additional heat is used to control the temperature of the transmission (7) and/or the first drive unit (5), which heat is obtained during operation of an electrical energy store (17), wherein electrical energy stored in the energy store (17) is used at least temporarily to operate the second drive unit (6).

## Revendications

1. Dispositif de propulsion (4) avec un premier groupe d'entraînement (5) conçu en tant que moteur à combustion interne, un second groupe d'entraînement (6) conçu en tant que machine électrique, ainsi qu'une transmission (7), par laquelle le premier groupe d'entraînement (5) et/ou le second groupe d'entraînement (6) est couplé ou peut être couplé à un arbre de sortie (8) du dispositif de propulsion (4), le premier groupe d'entraînement (5) et le second groupe d'entraînement (6) étant connectés temporairement, pour la régulation de la température, à un circuit de refroidissement commun (9) s'étendant à travers les deux groupes d'entraînement (5, 6), la transmission (7) pour la régulation de la température présentant un échangeur de chaleur de transmission (12) qui est ou peut être connecté fluidiquement au circuit de refroidissement (9) par une conduite de circulation (13), **caractérisé en ce qu'**une conduite de circulation (13) des deux côtés du second groupe d'entraînement (6) débouche dans une conduite du circuit de refroidissement (9) et est interrompue fluidiquement dans un premier état de commutation d'une soupape de commutation (14) et est libérée dans un second état de commutation, de sorte que, dans le premier état de commutation de la soupape de commutation (14), le circuit de refroidissement (9) passant à travers le premier groupe d'entraînement (5) et le second groupe d'entraînement (6), mais pas à travers l'échangeur de chaleur de transmission (12), est formé et, lorsque le second groupe d'entraînement (6) est en fonctionnement, de la chaleur est envoyée au premier groupe d'entraînement (5), et dans le second état de commutation de la soupape de commutation (14), le circuit d'échange de chaleur (15) est formé, le second groupe d'entraînement (6) et l'échangeur de chaleur de transmission (12), mais pas la première unité d'entraînement (5), étant présents et la chaleur générée pendant le fonctionnement du second groupe d'entraînement (6) étant utilisée pour la régulation de la température de la transmission (7).

2. Dispositif de propulsion selon la revendication 1, **caractérisé par** un accumulateur d'énergie électrique (17) pour l'accumulation intermédiaire d'énergie électrique pour le fonctionnement du second groupe d'entraînement (6), l'accumulateur d'énergie (17) présentant un échangeur de chaleur à accumulation d'énergie qui est ou peut être connecté fluidiquement au circuit de refroidissement (9) par une autre conduite de circulation (19).

3. Dispositif de propulsion selon la revendication 2, **caractérisé en ce que** la conduite de circulation supplémentaire (19) peut être découplée fluidiquement du circuit de refroidissement (9) au moyen d'une autre soupape de commutation.

4. Procédé de fonctionnement d'un dispositif de propulsion (4) selon une ou plusieurs des revendications précédentes, le dispositif de propulsion (4) présentant un premier groupe d'entraînement (5) conçu en tant que moteur à combustion interne, un second groupe d'entraînement (6) conçu en tant que machine électrique, ainsi qu'une transmission (7), par laquelle le premier groupe d'entraînement (5) et/ou le second groupe d'entraînement (6) est couplé ou peut être couplé à un arbre de sortie (8) du dispositif de propulsion (4), le premier groupe d'entraînement (5) et le second groupe d'entraînement (6) étant connectés temporairement, pour la régulation de la température, à un circuit de refroidissement commun (9) s'étendant à travers les deux groupes d'entraînement (5, 6), la transmission (7) pour la régulation de la température présentant un échangeur de chaleur de transmission (12) qui est ou peut être connecté fluidiquement au circuit de refroidissement (9) par une conduite de circulation (13), **caractérisé en ce que** la conduite de circulation (13) des deux côtés du second groupe d'entraînement (6) débouche dans une conduite du circuit de refroidissement (9) et est interrompue fluidiquement dans un premier état de commutation d'une soupape de commutation (14) et est libérée dans un second état de commutation, de sorte que, dans le premier état de commutation de la soupape de commutation (14), le circuit de refroidissement (9) passant à travers le premier groupe d'entraînement (5) et le second groupe d'entraînement (6), mais pas à travers l'échangeur de chaleur de transmission (12), est formé et, lorsque le second groupe d'entraînement (6) est en fonctionnement, de la chaleur est envoyée au premier groupe d'entraînement (5), et dans le second état de commutation de la soupape de commutation (14), le circuit d'échange de chaleur (15) est formé, le second groupe d'entraînement (6) et l'échangeur de chaleur de transmission (12), mais pas la première unité d'entraînement (5), étant présents et la chaleur générée pendant le fonctionnement du second groupe d'entraînement (6) étant utilisée pour la régulation de la température de la transmission (7).

5. Procédé selon la revendication 4, **caractérisé en ce que** la chaleur qui se produit pendant le fonctionnement du second groupe d'entraînement (6) est utilisée pour réguler la température de la transmission (7).

6. Procédé selon la revendication 4 ou 5, **caractérisé en ce que** la régulation de la température de la transmission (7) s'effectue avec le premier groupe d'entraînement (5) désactivé.

7. Procédé selon l'une quelconque des revendications 4 à 6, **caractérisé en ce que** la chaleur est prélevée du second groupe d'entraînement (6) au moyen d'un échangeur de chaleur de groupe et est amenée à la transmission (7) au moyen de l'échangeur de chaleur de transmission (12).

8. Procédé selon l'une quelconque des revendications 4 à 7, **caractérisé en ce que**, après qu'une température de consigne a été atteinte par la transmission (7), la chaleur est utilisée pour réguler la température du premier groupe d'entraînement (5).

9. Procédé selon l'une quelconque des revendications 4 à 8, **caractérisé en ce que**, pour réguler la température de la transmission (7) et/ou du premier groupe d'entraînement (5), de la chaleur supplémentaire est utilisée, qui est produite pendant un fonctionnement d'un accumulateur d'énergie électrique (17), l'énergie électrique accumulée dans l'accumulateur d'énergie (17) étant utilisée au moins temporairement pour le fonctionnement du second groupe d'entraînement (6).
